# EUROPEAN PATENT APPLICATION

(11) **EP 2 466 817 A1**
(43) Date of publication of application: **20.06.2012**
(21) Application number: 10816676.0
(22) Date of filing: 09.09.2010
(51) Int. Cl.: H04L 12/56

(54) **VIRTUAL PRIVATE NETWORK IMPLEMENTATION METHOD AND SYSTEM**

(30) Priority: 18.09.2009 CN 200910176785
(71) Applicant: ZTE Corporation, Shenzhen, Guangdong 518057 (CN)
(72) Inventor: YAN, Xiangbiao, Shenzhen Guangdong 518057 (CN); SUN, Yizhou, Shenzhen Guangdong 518057 (CN)
(74) Representative: Manitz, Finsterwald & Partner GbR
(86) International application number: PCT/CN2010/076777
(87) International publication number: WO 2011/032472

(57) **Abstract**

The present invention discloses a virtual private network (VPN) implementation method and system. The implementation of the VPN is based on the Location/ID separation network, and the corresponding VPN attribute is added to the mapping relation between the ID identifier and the location identifier. When performing the mapping processing, if the VPN attribute of the source host is judged to be the same as that of the destination host, the location identifier of the destination host is inquired, thereby the forwarding of the data packets is implemented according to the location identifier of the destination host; if the VPN attributes are not same, an unavailable message is replied. Thus, the virtual private network is implemented efficiently, the convenience and safety of the host communication of the VPN side are ensured, and the user requirement to the virtual private network is satisfied.

## Description

### Technical Field

The present invention relates to a locator/ID separation technology, and in particular, to a method and system for implementing a virtual private network.

### Background of the Related Art

The research on the next generation information network architecture is one of the most popular subjects currently. A basic direction of these research subjects is for the purpose of seamless integration of services by telecommunications networks represented by voice services, TV networks represented by video services, and Internet represented by data services, and is characterized by a network bearing based on IP. Typical examples are such as Voice over Internet Protocol (VOIP) networks providing voice services and IPTV networks providing TV services, 3G mobile communications networks born by an IP core network, as well as a large number of research projects for super 3G or 4G networks and so on.

4G is an abbreviation of the 4th generation mobile communications system, and the purpose of 4G is to provide an IP bearer network based solution for the voice, data and streaming media services, so that users can obtain a higher speed communications environment at any time, any place, any service.

The Next Generation Network (NGN) is a NGN established on a telecommunication network, and is intended to establish a uniform IP message switching based transport layer. The development of a variety of applications on the uniform transmission level can be independent of specific transmission technologies, which extends the application range of applications.

3G and 4G are the research core for the NGN in the wireless communications field, and is intended to improve the quality of the wireless mobile communication based on all-IP message core network; NGN and the Next-Generation Internet (NGI) are researches on NGN convergence in the telecommunication network and Internet fields respectively; China's Next Generation Internet (CNGI) is intended to construct an IPv6-based NGI; and "basic research on the Architecture of Universal trusted Network and Pervasive Services" of the Beijing Jiaotong University desires to be able to construct a uniform new message network. Although there is a considerable difference between various researches, a generally accepted view of the various researches is that the future network is a message-based uniform bearer network. Therefore, the research on the NGN architecture will be based on the internet as a primary reference object. Internet has been developed at a top speed since its emergence, and has become the most successful, the most vigorous communications network, and its characteristics such as flexible scalability, efficient message switching, a powerful terminal etc. very conforms to requirements of the new NGN design. Therefore, Internet will be the main reference blueprint for the new generation network design. However, the structure of the Internet is far from optimal, and there are many important design issues, which are mainly manifested in the following aspects in addition to the above IP address space being unable to meet the application requirements.

The Internet was invented in the 1970s, and it was difficult for people to predict there would be a large number of mobile terminals and multi-home terminals in the world today, and therefore, the Internet protocol stack at that time was mainly designed for the terminal which is connected in a "fixed" manner. In the network environment at that time, as the terminal basically did not move from one position to another position, the transmitting address was the receiving address, and the path was reversible, the IP address with the dual attributes of ID and locator can work very well, and no conflict occurred between the ID attribute and the locator attribute of the IP address. The IP address representing the ID and locator precisely meets the network requirements at that time. From the network environment at that time, this design is simple and effective, which simplifies the protocol stack hierarchy. However, there is no doubt that an internal conflict exists between the ID attribute and locator attribute of the IP address. The ID attribute of the IP address requires any two IP addresses to be equal. Although the IP addresses can be allocated in accordance with the organization, there is no necessary relationship between the continuously-coded IP addresses, or there is no necessary relationship at least at a topological locator; the locator attribute of the IP address requires the IP addresses to be allocated based on a network topology (instead of the organization), and all IP addresses in the same subnet should be in a continuous IP address block, so that prefixes of the IP addresses in the network topology can be aggregated, thus reducing the entries of the routing table of a router device and ensuring the scalability of the routing system.

With the development of the network size and the technology, some technologies for allocating dynamically IP addresses, such as the Dynamic End host Configuration Protocol (DHCP) gradually emerge, which began to break the assumption that an IP address uniquely represents an end. The use of private IP address space and the birth of the Network Address Translator (NAT) technology make the situation even worse. In this case, the IP address having both the ID attribute and the locator attribute is difficult to play its role, and the dual attribute problem of the IP address has been prominent. Besides that the requirements at the technical level change significantly, the Internet users have also undergone tremendous change. In the first few years after the birth of the Internet, the Internet is basically shared by some mutually trusted personnel in the same group, and the traditional Internet protocol stack was designed based on this assumption; the current Internet users are quite a mixed bag, it is difficult to trust each other. In this case, the Internet without the built-in security mechanism also requires changing.

Overall, the inherent contradictions of the dual-attribute of the IP address will result in the following primary problems:

### 1. The problem of routing scalability

The scalability of the Internet routing system has a basic assumption: "either the addresses are allocated according to the topology, or the topology is deployed according to the addresses". The ID attribute of the IP address requires that the IP addresses are allocated based on the organization (not the network topology) to which the end belongs, and this allocation needs to maintain a certain stability and cannot change frequently; the locator attribute of the IP address requires that the IP addresses are allocated based on the network topology, so as to ensure the scalability of the routing system. Thus, a conflict comes between the two attributes of the IP address, which finally leads to the scalability problem of the Internet routing system.

### 2. The problem of mobility

The ID attribute of the IP address requires that the IP address should not change with the end locator , so as to guarantee that the communication bound to the ID is not interrupted, and also guarantee that after the end moves, other ends can still use its ID to establish the communication connection with the end; while the locator attribute of the IP address requires that the IP address changes with the end locator, so that the IP addresses can aggregate in a new network topology, otherwise, the network must reserve a separate routing information for the moved end, resulting in the rapid increase of the routing table entries.

### 3. The problem of multiple homes

Multiple homes usually mean that the ends or networks simultaneously access to the Internet via the networks of a plurality of ISPs (Internet Service Providers). The advantages of the multi-home technology comprise increasing the network reliability, supporting the traffic load balancing between multiple ISPs and improving the overall available bandwidth and so on. However, the internal contradiction of the dual attributes of the IP address makes the multi-home technique difficult to achieve. The ID attribute of the IP address requires that a multi-home end shows always the unchanged ID to other ends, no matter via how many ISPs the end accesses to the Internet; while the locator attribute of the IP address requires that a multi-home end uses different IP addresses to communicate in different ISP networks, so as to ensure that the end's IP address is able to aggregate in the ISP network topology.

### 4. Security and locator privacy problem.

Since the IP address contains both the ID information and locator information of the end, the communication peer end and malicious eavesdroppers can obtain simultaneously the ID information and the topology locator information of the end based on the IP address of the end. Overall, since the system structure is established for the traditional Internet, the technology environment and user groups of the Internet have undergone enormous changes, and the Internet needs to be innovated. The problem of dual attributes of the IP address is one of the basic reasons troubling the Internet to continue to develop, and separating the ID attribute and the locator attribute of the IP address is a good idea to solve the problems faced by the Internet. The new network will be designed based on this idea, and a network architecture where the ID information is separated with the locator information is proposed to solve some serious drawbacks of the existing Internet.

In order to solve the problem of ID and locator, the industry makes a lot of researches and explorations, and the basic idea of all the ID and locator separation schemes is to separate the dual attributes, ID and locator, that are originally bound to the IP address. Among the schemes, some schemes use the URL (Uniform Resource Locator, which is an identification method used to completely describe the addresses of Web pages and other resources in the Internet) in the application layer or the FQDN (Fully Qualified Domain Name) as the ID identifier of the end; some schemes introduce a new name space as the ID identifier, for example, the HIP (End host Identity Protocol) adds a end host identifier to the network layer which takes the IP address as the locator identifier; some schemes classify the IP addresses, in which, a part of the IPs are used as the ID identifier and a part of the IPs are used as the locator identifier, for example, the Endpoint ID (EID) is used as the ID identifier and the Routing Locator (RLOC) is used as the locator identifier and so on in the Locator/ID Separation Protocol (LISP).

In these schemes, the research on the LISP is particularly concerned by the industry, a LISP working group is established in the IETF, and the regulations of the LISP working group will be dedicated to works in aspects such as the LISP basic protocol (draft-farinacci-lisp-12.txt), the mapping system (draft-fuller-lisp-alt-05.txt) of LISP+LISP Alternative Topology (ALT), the LISP interoperability (draft-Lewis-lisp-interworking-02.txt), the LISP map-server (draft-Fuller-lisp-ms-00.txt), the LISP multicast (draft-farinacci-lisp-multicast-01.txt). The working group will encourage and support the works defined for requirements of the LISP implementation and boundary mapping system with interoperability, and the working group will also be dedicated to works in aspects such as security configuration of the ALT or other mapping systems.

The VPN (virtual private network) can achieve interconnections between different network components and resources. The VPN can use the infrastructures of the Internet or other public Interconnection networks to create a tunnel for the user, and provide the same security and functionality guarantees as the private network.

There are many implementation solutions for the VPN, and these implementation solutions are specifically divided into the customer premises equipment VPN solution (CPE - VPN) and the Provider Provisioned VPN solution (PP - VPN).

The CPE - VPN solution is characterized by that the user sets, manages and maintains the VPN gateway device, and standard VPN tunneling based connections are established between various branches and corporate headquarter through the public IP network, wherein, the tunneling protocol usually uses the Layer 2 tunneling protocol (L2TP), Point to Point Tunneling Protocol (PPTP), IPsec (secure IP), IP in IP (IP encapsulated in IP) and GRE (Generic Routing Encapsulation), and so on, and various encryption technologies and NAT technologies are used to guarantee the security of data transmission.

The establishment and management of the VPN tunneling connection are full charged by the users themselves, and the providers do not need to adjust or change the network structure and performance. This approach is commonly referred to as "self-built VPN" mode.

The VPN supported enterprise uses public networks such as the Internet to establish connections with its branches or other companies and make secure communications. This VPN connection established across Internet is logically equivalent to the connection established between two places by using the wide area network. Although the VPN communication is established on the basis of the public interconnected network, the users feel that they use the private network to communicate when using the VPN, so the network is named the virtual private network. The VPN technology can solve the problem that employees need access to central resources, and companies must timely and effectively communicate with each other in the case that remote communication amount increases day after day and enterprise global operations are widely distributed.

The basic usage of the VPN is:
achieving remote user access via the VPN, the VPN supporting to access the enterprise resources remotely in a secure way through the public interconnection network, for example, the VPN users firstly dial the broadband remote access server (BRAS) of the local Internet service provider (ISP), then use the VPN software to establish a VPN across the Internet or other public interconnection networks between the remote user and the enterprise VPN server with the connection established with the local ISP.

When a VPN is used to connect a remote local area network, there is no need to use expensive long-distance dedicated circuit, and the routers in the branches and enterprise end can connect the Internet via the local ISP by using their own local private lines, or dial-up to access into the broadband access server of the ISP so as to connect the Internet. The VPN software is used to establish a VPN between the routers of each branch and the router of the enterprise end with the established connection to the local ISP and the Internet.

The VPN technology uses the L2TP and the L2TP protocol allows to encrypt the IP, Internetwork Message Exchange protocol (IPX), or NetBIOS Extend User Interface (NetBEUI) data stream, and then transmit the data stream through any network supporting point-to-point datagram delivery, such as IP, X.25, frame relays or Asynchronous Transfer Mode (ATM). For the IPsec tunnel mode, the IPSec tunnel mode allows encrypting IP payload data, then encapsulating the data in the IP header, and transmitting the data through the enterprise IP network or the public IP Internet such as the Internet.

The operator implemented PP - VPN solution means to set a VPN gateway device in the public data communication network of the operator for the dedicated access users or remote dial-up access users. With the gateway device, the VPN may be established via technologies such as the tunneling encapsulation, virtual routers or MPLS (Multiprotocol Label Switching) based on the specific VPN network needs in the whole network, and the encryption technology can be used to protect the data transmission security. The establishment of the VPN connection is entirely charged by the operator, and is transparent to the user. This method is commonly referred to as "outsourcing VPN" mode.

At the same time as the rapid development of the broadband access network, in order to expand their business with high quality, the operators must solve the following problem: how to perform a rational hierarchical planning on the network structure to achieve the user positioning and service management. Since the Ethernet technology is widely used in the access network level, currently, the technology achieving the network dividing based on the Ethernet is mainly the virtual local area network (VLAN) technology. The VLAN is an emerging technology that achieves a virtual working group by logically rather than physically dividing the devices in the LAN into multiple network segments. The IEEE (The Institute of Electrical and Electronics Engineers) issued the 802.1Q protocol standard draft to standardize the VLAN implementation scheme in 1999. The traditional Ethernet frame format defines 4096 VLANs which are proposed to solve the broadcast problem and the safety of Ethernet. The VLAN adds the VLAN header on the basis of the Ethernet frame, uses the VLAN ID to divide the users into smaller working groups, and restricts the users in different working groups exchange visits in the second layer. Each working group is a virtual LAN, of which the benefit is that it can restrict the broadcast range, form a virtual working group and dynamically manage the network. The VLAN isolates the broadcast storm and also isolates the communications between different VLANs, so the routers are needed to complete the communications between different VLANs.

There are several main methods for dividing the VLAN. One is to divide the VLAN according to the port, and this method is still the most common method; the second method is to divide the VLAN based on the MAC (Media Access Control) address, the biggest advantage of which is that the VLAN does not need to be reconfigured when the user physical position moves, that is, the position changes from one switch to another switch, and the disadvantage is that all the users must be configured during the initialization, leading to a lower execution efficiency of the switch; the third method is to divide the VLAN based on the network layer, which divides the VLAN according to the network layer address or the protocol type (if supporting multiple protocols) of each end host rather than according to the routing, so even if the user's physical position changes, it does not need to reconfigure the VLAN to which the user belongs, the disadvantage is that re-analyzing the frame header will reduce efficiency; the fourth method is to divide the VLAN based on the IP multicast, wherein, the IP Multicast is actually also a definition of the VLAN, that is, a multicast group is considered to be one VLAN, this VLAN division method expands the VLAN to the wide area network, so this method has greater flexibility, moreover, the method can easily be extended through the router.

As the VPN technology in specific Ethernet communication environments, the VLAN has been applied in a large scale on broadband access. The VPN that is applied frequently in the core network or the wide area network is the VPN based on the multi-protocol label switching (MPLS).

The emergence of the Multi-Protocol Label Switching (MPLS) technology changes the whole Internet system structure. The technical scheme of using the MPLS technology to implement the VPN significantly reduces the deficiencies of the traditional IP network, and further provides the same security guarantee as the Frame Relay or ATM (Asynchronous Transfer Mode) network, thus it can be well adapted to the VPN service needs.

The network model of MPLS VPN comprises: a customer edge (CE) device, which may be a router or Layer 2 switch that is located at the client side and provides access to the network provider; the provider edge (PE) router, which mainly maintains the node related forwarding table, exchanges the VPN routing information with other PE routers, and uses the Label Switched Path (LSP) in the MPLS network to forward the VPN service, and this is the Label Edge Router (LER) in the MPLS network; the provider router (PR), which uses the established LSP to transparently forward the VPN data, and does not maintain the VPN-related routing information, and this is the Label Switching Router (LSR) in the MPLS network.

The advantages of the MPLS VPN:
security: since the MPLS VPN uses the routing isolation, address isolation, information hiding and other various means, it provides anti attack and anti label spoofing methods, thus the MPLS VPN is completely able to provide security guarantees similar to the ATM / FR VPN.

Scalability: the MPLS VPN is highly scalable. On the one hand, the MPLS network can accommodate a large number of VPNs, on the other hand, for the number of user nodes, since the BGP (Border Gateway Protocol) is used to allocate and manage the members, the number of user nodes in the same VPN is not restricted, and it is easy to be expanded, and any node can directly communicate with any other nodes. Especially, it does not need to one-by-one configure the circuits between the user nodes when implementing the full-grid communication between the user nodes, and the user side only needs one port / one line to access the network, thus avoiding the N square scalability problem.

Reliability: the MPLS VPN services naturally have a large bandwidth, multiple nodes, multiple routes, sufficient network and transmission resources to ensure the network reliability. When the trunk line within the Internet is interrupted, the MPLS VPN traffic detours to the other circuits based on the IGP (Interior Gateway Protocol) together with the general Internet traffic, the process is automatically fulfilled relying completely on the IGP convergence, and is completely transparent to the users, and no single point failure exists during the transmission in the wide area network.

### Summary of the Invention

All of the above VPN technologies are implemented based on the existing data communications networks under existing network architecture. The IP address has a double meaning of ID and locator. Under the LISP technical architecture, the IP address only has a locator attribute as an identifier of the geographic position of three-layer network of the host, and a new ID identifier of the host is added to be used for communication, the locator identifier of the host is determined by the geographic position where the host is and network topology. In the process of the host being moved, the change of the locator results in a change of the locator identifier of the host, but the ID identifier of the host belongs to an identifier which is uniquely used by the terminal ID, and is not changed during the process of the host being moved. Meanwhile, an ID identifier-to-locator identifier mapping of the host is further required to be added, and functional entities are needed to implement the mapping relationship.

Under the locator/ID separation network architecture, the implementation of the above VPN technology is influenced, and the influence on the PP-VPN solution is relatively small. The locator/ID separation primarily involves that an ID and access management of a user of the VPN requires to perform an authentication management using the ID identifier of the host, and an update processing is needed for the management system; while for the CPE-VPN solution, after the locator/ID separation, the host no longer uses the IP address for communication, but needs to use the ID identifier EID of the host for communication which has a larger influence, and an update processing on a VPN software is needed to support the ID identifier of the host.

The technical problem to be solved by the present invention is to provide a method and system for implementing a VPN, so as to implement a VPN in the locator/ID separation network.

In order to solve the above technical problems, the present invention provides a method for implementing a VPN, wherein, the method is implemented based on a Locator/ID Separation Protocol (LISP) Network, the VPN network includes an Ingress Tunnel Router (ITR), a map-server and an Egress Tunnel Router (ETR), the method comprises:
A. after receiving a data message transmitted by a source host, the ITR transmitting a mapping request message carrying a VPN attribute of the source host and an ID identifier of a destination host to a host VPN attribute storage network element;
B. the host VPN attribute storage network element receiving the mapping request message, and determining the VPN attribute of the destination host according to the ID identifier of the destination host;
C. the host VPN attribute storage network element comparing the VPN attribute of the source host and the VPN attribute of the destination host to determine whether the VPN attributes of the source host and the destination host are the same, and inquiring the mapping and returning a mapping response message carrying a locator identifier of the destination host only if the VPN attributes are the same, and returning unreachable information if the VPN attributes of the source host and the destination host are different; and
D. the ITR receiving the mapping response message, forwarding the LISP data message to the ETR according to the locator identifier of the destination host, and the ETR forwarding the LISP data message to the destination host;
wherein, the host VPN attribute storage network element is the map-server or the ETR.

Preferably, before Step A, after the ITR receives the data message transmitted by the source host, the ITR firstly inquires a local mapping relationship, and if the ID identifier of the destination host is found and the VPN attribute of the source host and the VPN attribute of the destination host are the same, obtains the locator identifier of the destination host and forwards the data message to the ETR according to the locator identifier of the destination host; otherwise, performs Step A.

Preferably, in Step D, the LISP data message is forwarded to the destination host only if the VPN attributes of the source host and the destination host are the same.

Preferably, in Steps A and C, the mapping request message and the mapping response message are transmitted through a LISP control message path; and the data message is transmitted through a LISP data message path, and the data message includes the VPN attribute.

Preferably, the VPN attribute includes the VPN identifier, and different VPN identifiers represent different VPNs.

Preferably, the VPN attribute includes information of whether the source host is a VPN host.

In order to solve the above technical problems, the present invention further provides a system for implementing a VPN, comprising an ITR, a map-server and an ETR, wherein,
the ITR includes a first data message transmitting-receiving module, a message processing module, a first control message transmitting-receiving module, a first local mapping table and a mapping inquiring module, wherein,
the first data message transmitting-receiving module is configured to receive a data message transmitted by a source host, and forward a LISP data message to the ETR;
the message processing module is connected to the first data message transmitting-receiving module, and is configured to analyze the received data message transmitted by the source host and notify the mapping inquiring module, and generate a mapping request message carrying a VPN attribute of the source host and an ID identifier of the destination host according to an inquiry result of the mapping inquiring module; and is further configured to generate a LISP data message to be forwarded to the ETR according to a mapping response message received by the first control message transmitting-receiving module;
the first control message transmitting-receiving module is connected to the message processing module, and is configured to transmit the mapping request message to the host VPN attribute storage network element, and receive the mapping response message transmitted by the host VPN attribute storage network element; the host VPN attribute storage network element is the map-server or the ETR;
the first local mapping table is configured to store a mapping relationship between the VPN attribute, the ID identifier and a locator identifier;
the mapping inquiring module is connected to the message processing module and the first local mapping table, and is configured to inquire the VPN attribute of the source host according to the ID identifier of the source host;
the map-server includes a second control message transmitting-receiving module, a second local mapping table and a first mapping processing module, wherein,
the second control message transmitting-receiving module is configured to receive the mapping request message transmitted by the ITR and transmit the mapping response message to the ITR;
the second local mapping table is configured to store the mapping relationship between the VPN attribute, the ID identifier and the locator identifier;
the first mapping processing module is connected to the second control message transmitting-receiving module and the second local mapping table, and is configured to inquire the second local mapping table according to the ID identifier of the destination host to obtain the VPN attribute of the destination host, and compare the VPN attribute of the source host and the VPN attribute of the destination host to determine whether the VPN attribute of the source host and the VPN attribute of the destination host are the same, and inquire the second local mapping table to obtain the locator identifier of the destination host when the comparison result is the same; and is further configured to generate a mapping response message according to the inquiry result; and
the ETR includes a second data message transmitting-receiving module, a third control message transmitting-receiving module, a third local mapping table and a second mapping processing module; wherein,
the second data message transmitting-receiving module is configured to receive the LISP data message transmitted by the ITR;
the third control message transmitting-receiving module is configured to receive the mapping request message transmitted by the ITR and transmit a mapping response message to the ITR;
the third local mapping table is configured to store the mapping relationship between the VPN attribute, the ID identifier and the locator identifier;
the second mapping processing module is connected to the third control message transmitting-receiving module and the third local mapping table, and is configured to inquire the third local mapping table according to the ID identifier of the destination host to obtain the VPN attribute of the destination host, and compare whether the VPN attribute of the source host and the VPN attribute of the destination host are the same, and inquire the third local mapping table to obtain the locator identifier of the destination host when the comparison result is the same; and is further configured to generate a mapping response message according to the inquiry result.

Preferably, the mapping inquiring module of the ITR is configured to inquire the first local mapping table according to the ID identifier of the destination host, and compare the VPN attribute of the source host and the VPN attribute of the destination host to determine whether the VPN attribute of the source host and the VPN attribute of the destination host are the same, and inquire the first local mapping table to obtain the locator identifier of the destination host when the comparison result is the same; and is further configured to notify the message processing module to generate the LISP data message to be forwarded to the ETR; and is further configured to notify the message processing module to generate the mapping request message if the mapping relationship of the destination host is not found.

Preferably, the first control message transmitting-receiving module of the ITR is further configured to transmit a mapping maintenance request carrying a maintenance operation type and a mapping relationship to be maintained to the map-server; the third control message transmitting-receiving module of the ETR is further configured to transmit a mapping maintenance request carrying a maintenance operation type and a mapping relationship to be maintained to the map-server; the second control message transmitting-receiving module of the map-server is further configured to receive the mapping maintenance request transmitted by the ITR or the ETR; and the first mapping processing module of the map-server is further configured to maintain the second local mapping table according to the mapping maintenance request, and the maintenance operation type includes registration, cancellation and modification.

Preferably, the mapping request message and the mapping response message are transmitted through a LISP control message path; and the data message is transmitted through a LISP data message path, and the data message includes the VPN attribute.

Preferably, the VPN attribute includes the VPN identifier, and different VPN identifiers represent different VPNs.

Preferably, the VPN attribute includes information of whether the source host is a VPN host.

In order to solve the above technical problems, the present invention further provides another method for implementing a VPN, wherein, the method is implemented based on a system for implementing the VPN under LISP network architecture, and the system for implementing the VPN stores a mapping relationship between a VPN attribute, an ID identifier and a locator identifier, and the method comprises:
a message receiving step, in which the system for implementing the VPN receives a message transmitted by a source host;
a mapping processing step, in which the system for implementing the VPN compares the VPN attribute of the source host and the VPN attribute of the destination host to determine whether the VPN attribute of the source host and the VPN attribute of a destination host are the same, inquires the mapping relationship and obtains the locator identifier of the destination host when the VPN attributes are the same, and generates unreachable information when the VPN attributes are different; and
a message processing step, in which the system for implementing the VPN forwards the message according to the locator identifier of the destination host or ends the procedure according to the unreachable information.

Preferably, in the message processing step, the system for implementing the VPN forwards the message when determining the VPN attributes of the source host and the destination host are the same; otherwise, ends the procedure.

Preferably, the mapping processing step is implemented by an ITR, a map-server or an ETR in the LISP network architecture.

Preferably, the VPN attribute includes the VPN identifier, and different VPN identifiers represent different VPNs.

Preferably, the VPN attribute includes information of whether the source host is a VPN host.

In order to solve the above technical problems, the present invention further provides another system for implementing a VPN, wherein, the system is implemented based on a network of LISP architecture, and the system comprises:
a message receiving apparatus configured to receive a message transmitted by a source host and notify a mapping processing apparatus to perform the mapping processing;
the mapping processing apparatus, which is connected to the message receiving apparatus, and configured to store a mapping relationship between a VPN attribute, an ID identifier and a locator identifier, and perform a mapping processing, which comprises comparing the VPN attribute of the source host and the VPN attribute of the destination host to determine whether the VPN attributes of the source host and the destination host are the same, and inquiring the stored mapping relationship and obtaining the locator identifier of the destination host when the VPN attributes are the same, and generating unreachable information when the VPN attributes are different; and is further configured to transmit a mapping processing result to a message processing apparatus; and
the message processing apparatus, which is connected to the mapping processing apparatus, and is configured to receive the mapping processing result, and perform a message processing according to the mapping processing, which comprises forwarding the message according to the locator identifier of the destination host and ending the communication procedure according to the unreachable information.

Preferably, the message processing apparatus is further configured to compare the VPN attribute of the source host and the VPN attribute of the destination host to determine whether the VPN attributes of the source host and the destination host are the same, and forward the message when the VPN attributes are the same; otherwise, ends the procedure.

Preferably, the mapping processing apparatus is implemented by an ITR, a map-server or an ETR, and the message receiving apparatus and the message processing apparatus are implemented by the ITR.

Preferably, the VPN attribute includes the VPN identifier, and different VPN identifiers represent different VPNs.

Preferably, the VPN attribute includes information of whether the source host is a VPN host.

The method and system for implementing the VPN according to the present invention implement the VPN based on a locator/ID separation network, wherein, the corresponding VPN attributes are added in the ID identifier-to-locator identifier mapping relationship, and during the processing of the mapping, the locator identifier of the destination host is inquired when the VPN attribute of the source host and the VPN attribute of the destination host are determined to be the same, so as to implement the forwarding of the data message according to the locator identifier of the destination host; and when the VPN attributes are different, unreachable information is returned, so as to implement the VPN efficiently, thus ensuring the convenience and security of the VPN host communications and meeting the requirements of the users on the VPN.

### Brief Description of Drawings

Fig. 1 is a schematic diagram of a composition of LISP network architecture of a locator/ID separation.
Fig. 2 is a schematic diagram of LISP+ALT network architecture.
Fig. 3 is a schematic diagram of a system for implementing a VLAN according to the example of the present invention.
Fig. 4 is a schematic diagram of a method for implementing a VLAN according to the example of the present invention.

### Preferred Embodiments of the Present Invention

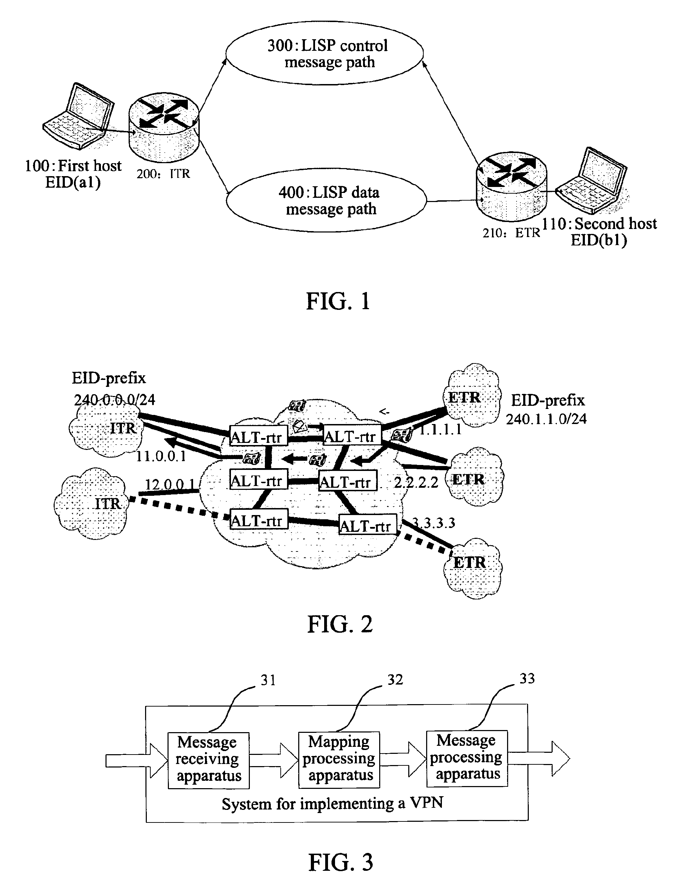

The LISP protocol network architecture is a network-based locator/ID separation scheme (see the latest version of technical documents of the LISP working group of the Internet Engineering Task Forum (IETF) for the specific contents, draft-farinacci-lisp-11.txt), which divides the IP addresses of the existing Internet into the ID identifier (Endpoint identifier, EID) and locator identifier (Routing Locator, RLOC), and the advantage of the scheme is that the current protocol stack of the terminal host needs not to be changed, and the compatibility of the terminal is good, and the focus is to solve the scalability of network routing scale, traffic engineering and mobility. The schematic diagram of the LISP network architecture is shown in Fig. 1, the architecture including hosts identified with EIDs (i.e., the first host 100 and the second host 110), an ITR 200 and an ETR 210, wherein, the ITR and the ETR are connected via a LISP control message path 300 and a LISP data message path 400, and it can be seen from the diagram that the two paths are different, and the message for processing ID-to-locator mapping is forwarded from the LISP control message path 300 using the LISP protocol, and the LISP encapsulated data message is forwarded from the LISP data message path 400. On the LISP control message path 300 of the ITR and the ETR, a map-server is set for processing the mapping, which is not shown in the figure.

The LISP scheme implements the management of the EID-to- RLOC mapping by establishing a logical topology, there are four development paths using the existing LISP protocol, and the difference is that the paths of the LISP control messages are different, wherein, the LISP3 is a development path, EID can not be routed, and a mapping processing is needed. Wherein, there are relatively more researches on the LISP + ALT (LISP Alternative Topology, see the latest version of technical documents of the LISP working group of the IETF for the specific contents, draft-fuller-lisp-alt-05.txt), and the schematic diagram of the LISP + ALT network architecture is illustrated in Fig. 2. The LISP + ALT establishes an existing network architecture based overlay network using the GRE and BGP routing protocols, and establishes the LISP control message path. The tunnel router uses this overlay network to inquire and reply to the mapping relationship between the ID identifier and locator identifier, the mapping relationship exists in a local cache and a distributed database (the distributed Endpoint Identifier-to-Routing Locator Mapping Database), and two access control routers i.e., ITR, ETR of the LISP implement the processing of the mapping relationship together with the map-server.

The ALT rtr in Fig. 2 represents a router of the ALT overlay network.

The main idea of the method and system for implementing the VPN according to the present invention is to implement the VPN based on a locator/ID separation network and increase a corresponding VPN attribute in the ID identifier-to-locator identifier (EID-to-RLOC) mapping relationship, and during the mapping processing, inquire the locator identifier of the destination host when the VPN attributes of the source host and the VPN attributes of the destination host are determined to be the same, so as to implement the forwarding of the data message according to the locator identifier of the destination host; and return unreachable information when the VPN attributes are different, and the communication fails, thus ensuring the security of the host communications at the VPN side and meeting the requirements of users on the VPN.

The method for implementing the VPN according to the present invention is implemented based on a LISP network, which includes an ITR, a map-server and an ETR, which stores a mapping relationship between the VPN attribute, the ID identifier and locator identifier, and the method comprises the following steps.

A. After receiving a data message transmitted by a source host, the ITR determines the VPN attributes of the source host according to a local mapping relationship, and transmits a mapping request (or map-request) message carrying the VPN attribute of the source host and the ID identifier of a destination host to the map-server or the ETR.

Specifically, this step can be implemented in this way: the ITR receives a single layer of LISP message (without a LISP header) transmitted by the source host, and transmits the mapping request message and waits for a reply for a LISP encapsulation;
the map-server or the ETR can be referred to as an host VPN attribute storage network element, and in normal conditions, the ITR transmits the mapping request message to the map-server, and if the ITR has determined the corresponding ETR to which the data message is forwarded, the mapping request message can also be transmitted to the ETR.

B. The map-server or the ETR receives the mapping request message, and determines the VPN attribute of the destination host according to the ID identifier of the destination host.

C. The map-server or the ETR compares the VPN attribute of the source host with the VPN attribute of the destination host to determine whether the VPN attributes of the source host and the destination host are the same, and returns a mapping response message carrying a locator identifier (RLOC) of the destination host to the ITR when the VPN attributes are the same; otherwise, returns unreachable information and ends the procedure.

D. The ITR receives the mapping response message, forwards the LISP data message to the ETR according to the locator identifier of the destination host, and the ETR forwards the LISP data message to the destination host.

After receiving the mapping response message, the ITR can update the local mapping relationship according to the mapping relationship implied in the mapping response (or map-reply) message or the whole mapping relationship of the destination host, so that the ITR can directly perform the mapping processing and data message forwarding according to the local mapping relationship after receiving the subsequent data message transmitted by the source host, and the mapping processing of the ITR is the same as that of the map-server and the ETR, i.e., inquiring the local mapping relationship, and if the ID identifier of the destination host is found, and the VPN attribute of the source host and the VPN attribute of the destination host are the same, obtaining the locator identifier of the destination host.

In the condition that the ID identifier of the destination host can not be found in the local mapping relationship, there are different processing modes for the ITR, the map-server and the ETR: for the ITR, if the ID identifier of the destination host can not be found locally, transmitting a mapping request message to the map-server; for the map-server, if the ID identifier of the destination host can not be found locally, forwarding a mapping request message to the ETR; and for the ETR, if the ID identifier of the destination host can not be found locally, returning unreachable information to the ITR through the map-server.

When forwarding the data message, the ITR firstly performs LISP encapsulation on the data message, wherein, the source and destination addresses of the outer header of the LISP protocol encapsulation message are the IP addresses of the ITR and ETP respectively, i.e., RLOC, forwards the LISP encapsulated data message to the ETR router through the data message path, and the ETR transmits the data message to the EID terminal after performing LISP de-encapsulation.

When it is put into realization, the EID of one host can map one or more RLOCs.

The mapping request message and the mapping response message described above are transmitted through the LISP control message path; and the data message is transmitted through the LISP data message path.

In different implementation modes, the VPN attribute has different meanings, and the following cases exist.
1. If hosts of multiple VPN networks are included in the locator/ID separate network, different VPN identifiers are set for different VPNs, and the VPN attribute refers to the VPN identifier of the host.
2. If the host of the VPN network and the host of the non-VPN network are both included in the locator/ID separate network, the VPN attribute refers to whether the host is the VPN host.
3. If hosts of multiple VPN networks and hosts of the non-VPN networks are included in the locator/ID separate network, the VPN attribute refers to whether the host is the VPN host, and when the host is the VPN host, the VPN identifier of the host.

For the VPN host, the communication between the VPN users is established only if the VPN identifiers are the same; otherwise, the communication can not be established, which ensures that the VPN host can not establish a communication with the hosts outside the VPN, and the hosts outside the VPN also can not access the VPN network, thus ensuring the security of the VPN network.

When the mapping relationship is changed, the ITR and the ETR transmit a mapping maintenance message carrying the maintenance operation type and mapping relationship to be maintained to the map-server through a LISP control message path; the map-server maintains the local mapping table according to the mapping maintenance request, and the maintenance operation type includes registration, cancellation and modification.

In addition, the ITR and the map-server can further update the local mapping relationship according to the mapping relationship carried in the mapping response message. It should be understood that the ITR and the ETR described in the present invention are ingress tunnel router and egress tunnel router with each other. In order to facilitate the description, the present invention defines the ITR and the ETR according to the transmission direction of the data message.

**Example:** the VPN implemented under the LISP network architecture according to the present invention.

When the VPN is implemented under the LISP network architecture, the mapping relationship of the VPN host and the mapping relationship of the non-VPN host can be stored in different mapping tables, and can also be stored in the same mapping table, and in either implementation mode, the mapping relationship can embody the mapping relationship between the VPN attribute, ID identifier and locator identifier.

The following is the description by example of storing in different tables.

First, a VPN identifier is set for a host with the ID identifier of the EID in the VPN, and a VPN specific mapping table is established, wherein, the VPN specific mapping table includes a mapping relationship between the VPN identifier, ID identifier EID and locator identifier RLOC of all client hosts belonging to the VPN, and in this case, the VPN attribute can be embodied only by the VPN identifier. For the condition that the VPN host and non-VPN host coexist, there are two kinds of mapping tables under the LISP network architecture, one of which is a LISP mapping table without the VPN identifier, and the other of which is a VPN mapping table with the VPN identifier. In the LISP mapping table, the VPN attribute of the host is the default non-VPN host. The LISP mapping table and the VPN mapping table are collectively referred to as the mapping table.

Each VPN network has one VPN identifier (VPN_ID) for identification, and thus multiple VPNs can be supported under the LISP network architecture, so as to meet the application requirements of many enterprise networks.

The mapping relationship of the client hosts in the VPN mapping table can be dynamically added or deleted.

After the ITR receives a LISP message of the host, if the source EID of the message belongs to the VPN, it is indicated that the ITR can only inquire the VPN mapping table of the VPN to which the user belongs when the ITR receives and processes the message of the host, that is, the communication between the VPN users can be established only if the VPN identifiers are the same; otherwise, the communication can not be established, which ensures that the communication can not be established with users outside the VPN mapping table, and the users outside the VPN mapping table can not inquire the VPN mapping table, can not access the VPN network, thus ensuring the security of the VPN network. Similarly, when performing a mapping processing on the OTR and the map-server, the VPN attributes of both parties should also be compared to determine whether they are the same, thus ensuring that the communication can only be established within the VPN.

An example for establishing the VPN mapping table

For the first VPN, users are represented as EID (a1, ... ,k1), the allocated VPN identifier is VPN_ID_(1), and the VPN mapping table can be established as follows:

| | | |
|---|---|---|
| ID identifier EID ( a1 ) | Locator identifier RLOC ( a1 ) | VPN_ID_(1) |
| ID identifier EID ( b1 ) | Locator identifier RLOC ( b1 ) | VPN_ID_(1) |
| ...... | ...... | ...... |
| ID identifier EID ( k1 ) | Locator identifier RLOC ( k1 ) | VPN_ID_(1) |

For the second VPN, users are represented as EID (a2, ... , k2), the allocated VPN identifier is VPN_ID_(2), and the VPN mapping table thereof is as follows:

| | | |
|---|---|---|
| ID identifier EID ( a2 ) | Locator identifier RLOC ( a2 ) | VPN_ID_(2) |
| ID identifier EID ( b2 ) | Locator identifier RLOC ( b2 ) | VPN_ID_(2) |
| ...... | ...... | ...... |
| ID identifier EID ( k2 ) | Locator identifier RLOC ( k2 ) | VPN_ID_(2) |

As the VPNs need an isolation there between and cannot intercommunicate, the table entries in the mapping table for the VPN identifier VPN_ID_(1) and the table entries in the mapping table for the VPN identifier VPN_ID_(2) can not overlap.

The VPN mapping tables are distributed in the device of the LISP network architecture as follows.

The ITR is an entrance for the source EID terminal to access to the VPN network, and sets a VPN identifier for the source EID belonging to the VPN. The ETR stores a map-database of the destination EID, and sets a VPN identifier for the destination EID belonging to the VPN.

The formats of the LISP data message, the LISP control message and the LISP message will be described as follows.

### The LISP data message header format:

In the present invention, the VPN identifier is carried in the LISP data message header and is specifically located following the Nonce column of the LISP message, and the LISP VPN data message header format is as follows:

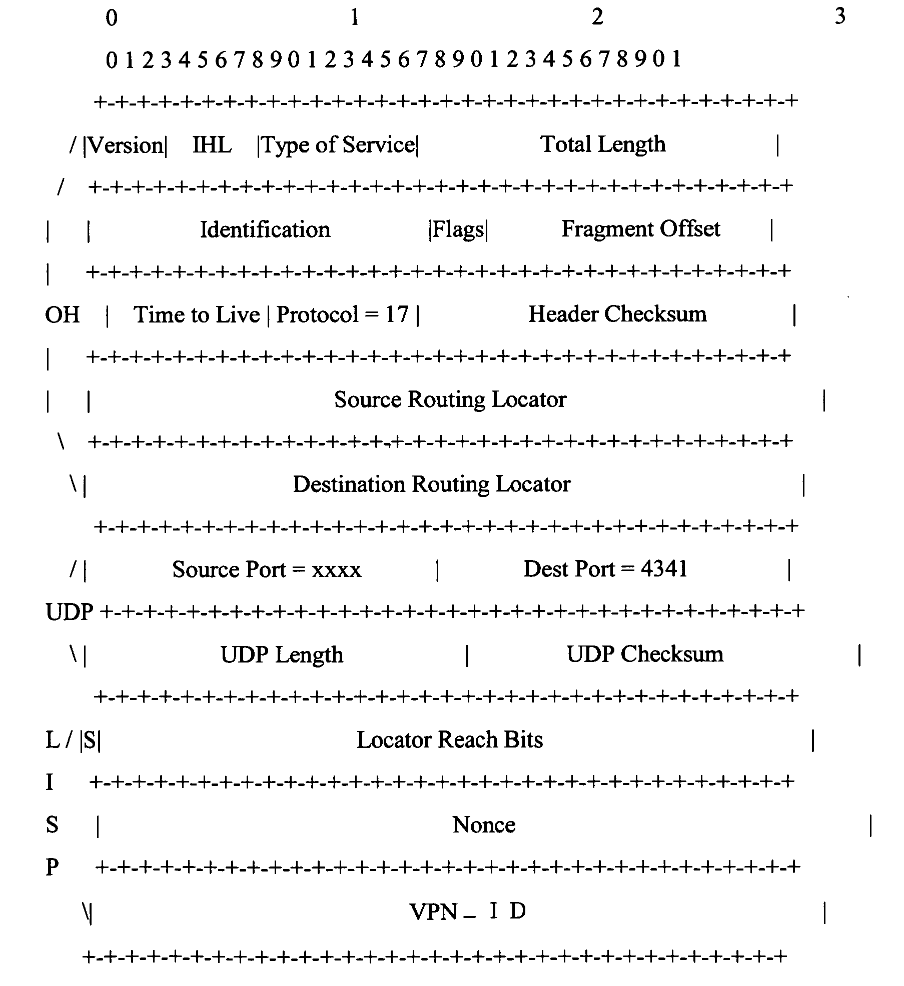

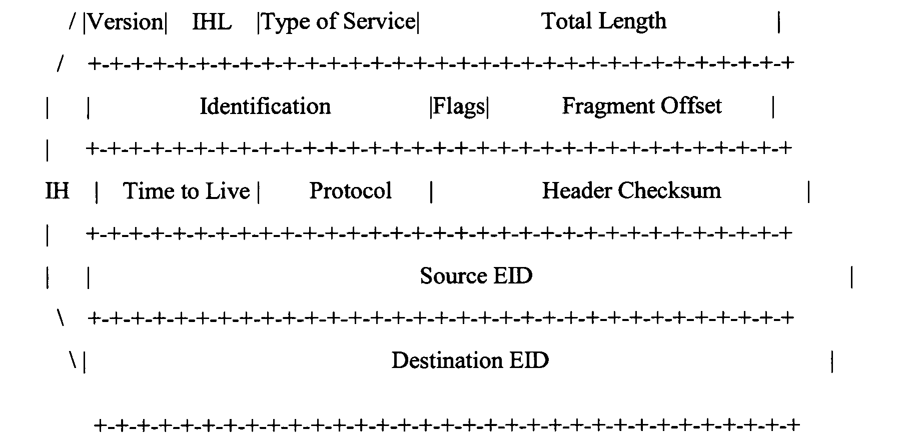

Wherein, the Inner Header (IH) indicates the inner message header, the Outer Header (OH) indicates the outer message header, and the VPN-ID indicates the VPN identifier.

### LISP control message header format

In the present invention, the VPN identifier is carried in the LISP control message header and is specifically located following the Nonce column of the LISP message, and the LISP VPN control message header format is as follows:

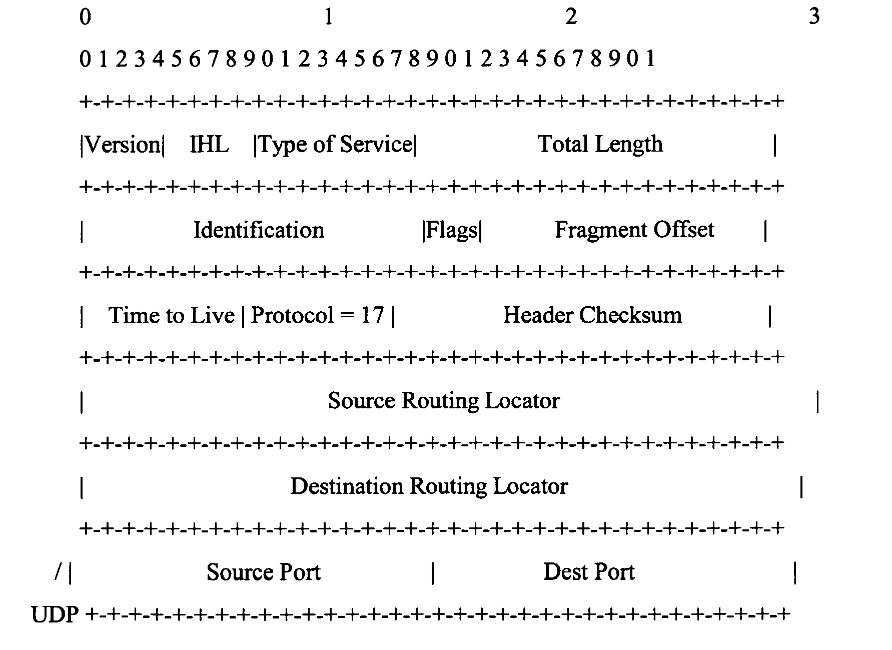

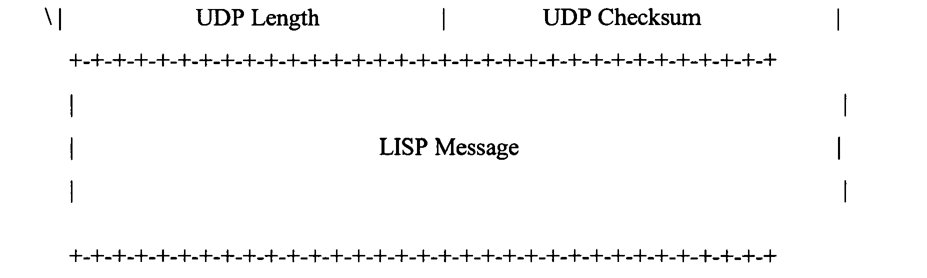

### LISP message format

In the present invention, the specific format of the LISP message is as follows:

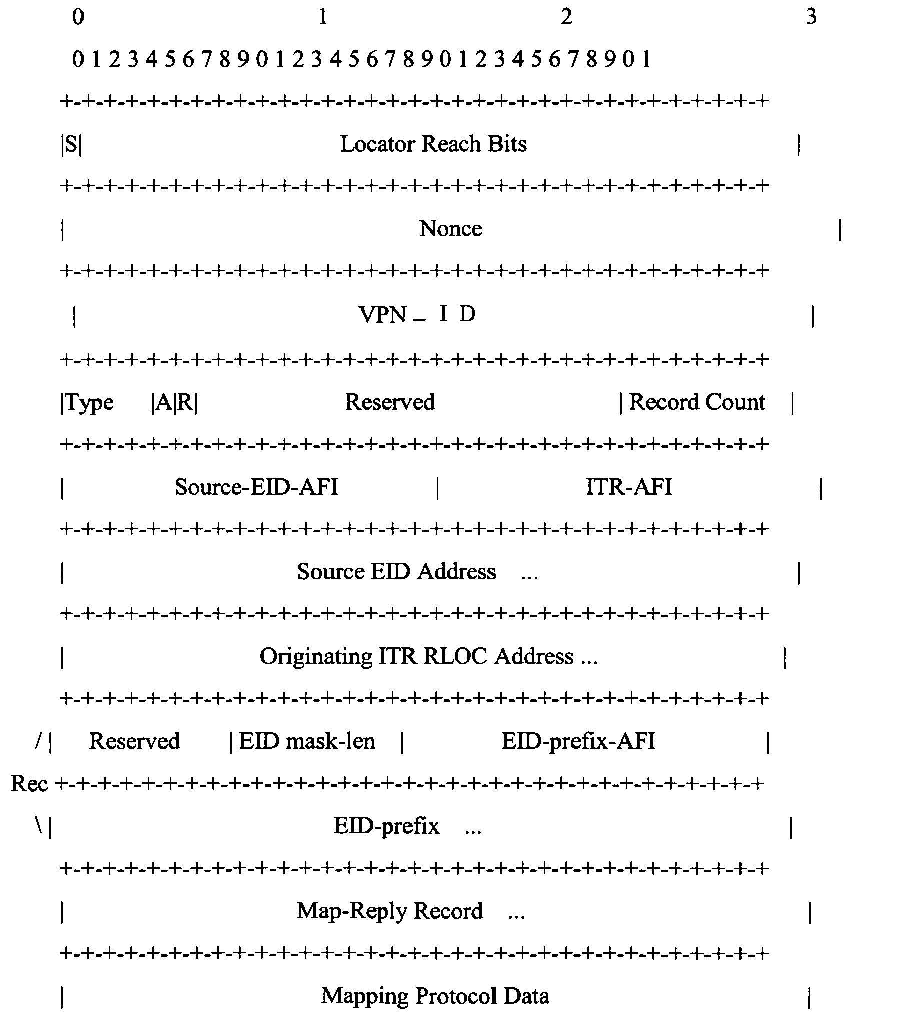

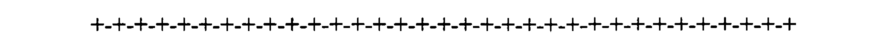

The LISP message includes a mapping request message (type=1), a mapping response message (type=2) and a map-register (type=3) and so on.

When the ITR router needs a mapping from the EID to the RLOC, a mapping request message is transmitted. Due to the trigger of the mapping request message, the ETR returns a RLOC matching to the EID included in the mapping request. The Map-register message is used to register a mapping relationship from the EID to the RLOC to the map-server, for example, the ETR issues the EID mapping relationship to the map-server.

A VPN tag indicating whether the host is the VPN terminal can further be added in the message, and when the message is a communication message of the VPN host, the VPN flag is true, which indicates that there is a VPN identifier in the message; and when the message is not a communication message of the VPN host, the VPN flag is false, which indicates that there is no VPN identifier in the message.

The implementation of the VPN under the LISP network architecture according to the invention has the following characteristics.
1. A VPN attribute is set for the host with the ID identifier of the EID in the VPN, and specifically, the VPN attribute is set for the terminal with the ID identifier being the EID in the local mapping database of the ITR, the ETR and in the map-server.
2. The VPN attribute is added in the LISP protocol message, which includes a data message (LISP Data Message) and a control message (LISP Control Plane Packet).

When the ITR transmits a mapping request message, the LISP VPN control message header format is used, wherein, the VPN attribute is the VPN attribute of the source EID.

When the ETR transmits a map-register message to the map-server, the LISP VPN control message header format is used, wherein, the VPN attribute is the VPN attribute of the EID which is managed by the ETR.

When the ITR router performs the LISP message encapsulation, the LISP VPN data message header format according to the present invention including the VPN attribute is used.
3. When all mapping processing apparatuses (including the ITR, the map-server and the ETR) under the LISP network architecture perform the mapping processing, the VPN attributes of the source EID and destination EID are compared to determine whether they are the same, and the mapping processing is performed only if the VPN attributes are the same; otherwise, unreachable information is returned.

When the ETR processes the mapping request message, the VPN attribute of the source EID and the VPN attribute of the destination EID are compared, and the LISP mapping processing is performed and the mapping response message is returned when the VPN attributes are the same; otherwise, an unreachable message is returned.

When the map-server performs the mapping processing, the mapping message is processed only if the VPN attribute of the source EID and the VPN attribute of the destination EID are the same.

The processing of mapping messages of all the other LISP VPNs needs to compare the VPN identifiers, to ensure the security of the VPN communication. The mapping messages have a total of following 12 kinds:

| Reserved: | 0 b'0000' |
|---|---|
| LISP Map-Request: | 1 b'0001' |
| LISP Map-Reply: | 2 b'0010' |
| LISP Map-Register: | 3 b'0011' |
| LISP-CONS Open Message: | 8 b'1000' |
| LISP-CONS Push-Add Message: | 9 b'1001' |
| LISP-CONS Push-Delete Message: | 10 b'1010' |
| LISP-CONS Unreachable Message | 11 b'1011' |

When the ETR de-encapsulates the LISP data message, the VPN attribute in the LISP VPN data message header is checked to determine whether it is the same as the VPN attribute of the destination EID, and the data is forwarded when the VPN attributes are the same; otherwise, abnormal processes such as discarding etc. is performed.

For the VPN host, the communication between the VPN hosts can be established only if the VPN identifiers are the same; otherwise, the communication can not be established, which ensures that the communication can not be established with the hosts outside the VPN, and the hosts outside the VPN can not access to the VPN network, thus ensuring the security of the VPN network.

In order to achieve the above method, the present invention further provides a system for implementing the VPN, which includes an ITR, a map-server and an ETR, wherein,
the ITR includes a first data message transmitting-receiving module, a message processing module, a first control message transmitting-receiving module, a first local mapping table and a mapping inquiring module, wherein,
the first data message transmitting-receiving module is configured to receive a data message transmitted by a source host, and forward a LISP data message to the ETR;
the message processing module is connected to the first data message transmitting-receiving module, and is configured to analyze the received data message and notify the mapping inquiring module, and generate a mapping request message carrying a VPN attribute of the source host and an ID identifier of the destination host according to an inquiry result of the mapping inquiring module; and is further configured to generate a LISP data message to be forwarded to the ETR according to the mapping response message received by the first control message transmitting-receiving module;
the first control message transmitting-receiving module is connected to the message processing module, and is configured to transmit the mapping request message to the host VPN attribute storage network element (i.e., the map-sever or the ETR), and receive the mapping response message transmitted by the host VPN attribute storage network element; and is further configured to transmit a mapping maintenance request carrying a maintenance operation type and a mapping relationship to be maintained to the map-server;
the first local mapping table is configured to store a mapping relationship between the VPN attribute, the ID identifier and the locator identifier;
the mapping inquiring module is connected to the message processing module and the first local mapping table, and is configured to inquire the VPN attribute of the source host according to the ID identifier of the source host; and inquire the first local mapping table according to the ID identifier of the destination host, and is further configured to compare whether the VPN attribute of the source host and the VPN attribute of the destination host are the same, and inquire the first local mapping table to obtain the locator identifier of the destination host when the comparison results are the same; is further configured to notify the message processing module to generate a LISP data message to be forwarded to the ETR; and is further configured to notify the message processing module to generate the mapping request message when the mapping relationship of the destination host is not found.
the map-server includes a second control message transmitting-receiving module, a second local mapping table and a first mapping processing module, wherein,
the second control message transmitting-receiving module is configured to receive the mapping request message transmitted by the ITR and transmit the mapping response message to the ITR;
the second local mapping table is configured to store the mapping relationship between the VPN attribute, the ID identifier and the locator identifier;
the first mapping processing module is connected to the second control message transmitting-receiving module and the second local mapping table, and is configured to inquire the second local mapping table according to the ID identifier of the destination host to obtain the VPN attribute of the destination host, and compare the VPN attribute of the source host and the VPN attribute of the destination host to determine whether the VPN attribute of the source host and the VPN attribute of the destination host are the same, and inquire the second local mapping table to obtain the locator identifier of the destination host when the comparison result is the same; and is further configured to generate a mapping response message according to the inquiry result; and
the ETR includes a second data message transmitting-receiving module, a third control message transmitting-receiving module, a third local mapping table and a second mapping processing module; wherein,
the second data message transmitting-receiving module is configured to receive the LISP data message transmitted by the ITR;
the third control message transmitting-receiving module is configured to receive the mapping request message transmitted by the ITR and transmit a mapping response message to the ITR;
the third local mapping table is configured to store a mapping relationship between the VPN attribute, the ID identifier and the locator identifier;
the second mapping processing module is connected to the third control message transmitting-receiving module and the third local mapping table, and is configured to inquire the third local mapping table according to the ID identifier of the destination host to obtain the VPN attribute of the destination host, and compare whether the VPN attribute of the source host and the VPN attribute of the destination host are the same, and inquire the third local mapping table to obtain the locator identifier of the destination host when the comparison result is the same; and is further configured to generate a mapping response message according to the inquiry result.

The mapping request message and the mapping response message are transmitted through a LISP control message path; and the data message is transmitted through the LISP data message path.

The third control message transmitting-receiving module of the ETR is further configured to transmit a mapping maintenance request carrying a maintenance operation type and a mapping relationship to be maintained to the map-server;
the second control message transmitting-receiving module of the map-server is further configured to receive the mapping maintenance request transmitted by the ITR or the ETR; and
the first mapping processing module of the map-server is further configured to maintain the second local mapping table according to the mapping maintenance request, and the maintenance operation type includes registration, cancellation and modification.

According to the procedure of processing the message, the system and method for implementing the VPN according to the present invention can be generalized as the following contents:
as shown in Fig. 3, the system for implementing the VPN according to the embodiment of the present invention is implemented based on a network of the locator/ID separation architecture, which comprises:
a message receiving apparatus 31 configured to receive a message transmitted by a source host and notify the mapping processing apparatus 32 to perform the mapping processing;
the mapping processing apparatus 32 connected to the message receiving apparatus 31, storing a mapping relationship between a VPN attribute, an ID identifier and a locator identifier, and configured to perform the mapping processing, which specifically comprises comparing the VPN attribute of the source host and the VPN attribute of the destination host to determine whether the VPN attributes of the source host and the destination host are the same, and inquiring the stored mapping relationship and obtaining the locator identifier of the destination host when the VPN attributes are the same, and generating unreachable information when the VPN attributes are different; and is further configured to transmit the mapping processing result to the message processing apparatus 33; and
the message processing apparatus 33 connected to the mapping processing apparatus 32, and configured to receive the mapping processing result, and perform a message processing according to the mapping processing, which specifically comprises forwarding the message according to the locator identifier of the destination host and ending the communication procedure according to the unreachable information.

Specifically, the message processing apparatus 33 can be configured to compare the VPN attribute of the source host and the VPN attribute of the destination host to determine whether the VPN attributes of the source host and the destination host are the same, and forward the message when the VPN attributes are the same; otherwise, ends the procedure.

It can be seen from the above contents that the mapping processing apparatus 32 can be implemented by an ITR, a map-server or an ETR, and the message receiving apparatus 31 and the message processing apparatus 33 are implemented by the ITR.

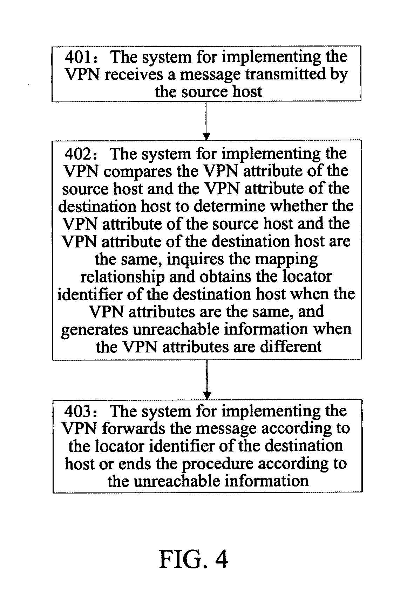

Accordingly, the method for implementing the VPN according to the example of the present invention is implemented based on the VPN network under the LISP architecture, and the system for implementing the VPN network stores the mapping relationship between the VPN attribute, the ID identifier, and the locator identifier. As shown in Fig. 4, the method comprises:
step 401: a message receiving step, in which the system for implementing the VPN receives a message transmitted by the source host;
step 402: a mapping processing step, in which the system for implementing the VPN compares the VPN attribute of the source host and the VPN attribute of the destination host to determine whether the VPN attribute of the source host and the VPN attribute of the destination host are the same, inquires the mapping relationship and obtains the locator identifier of the destination host when the VPN attributes are the same, and generates unreachable information when the VPN attributes are different; and
step 403: a message processing step, in which the system for implementing the VPN forwards the message according to the locator identifier of the destination host or ends the procedure according to the unreachable information.

In the message processing step, the message processing apparatus forwards the message when determining the VPN attributes of the source host and the destination host are the same; otherwise, ends the procedure.

The VPN attribute described in the present invention includes at least one of "the VPN identifier" and "information of whether it is the VPN host", and different VPN identifiers represent different VPNs; and the VPN attributes are added in the LISP data message and the LISP control message.

The method and system for implementing the VPN according to the present invention are based on locator/ID separation LISP network architecture, wherein, and corresponding VPN attributes are added in the ID identifier-to-locator identifier mapping relationship, and during the mapping processing is performed, the locator identifier of the destination host is inquired when the VPN attribute of the source host and the VPN attribute of the destination host are determined to be the same, so as to implement the forwarding of the data message according to the locator identifier of the destination host and establish the communication; and when the VPN attributes are different, unreachable information is returned, so as to implement the VPN efficiently, thus ensuring the convenience and security of the VPN host communications and meeting the requirements of the users on the VPN. The implementation method and system according to the present invention avoid the influence of the implementation of the existing VPN under the locator/ID separation network architecture, and reduce the modification of the existing device and software due to implementing the VPN, especially for the PP-VPN solution, and the present invention can be used as one of the PP-VPN solutions.

It can be understood by a person having ordinary skill in the art that all or some of the steps in the described method can be implemented by related hardware instructed by programs, which can be stored in a computer readable storage medium, such as a read-only memory, disk or CD-ROM, etc. Alternatively, all or some of the steps in the embodiments described above can also be implemented using one or more integrated circuits. Accordingly, each module/unit in the embodiments described above can be implemented in a form of hardware, or software functional module. The present invention is not limited to combinations of any particular forms of hardware and software.

Although the present invention is described in conjunction with specific embodiments, for those skilled in the art, various modifications and variations can be made without departing the spirit or scope of the present invention. Such modifications and variations can be considered as being within the scope of the present invention and the scope of the appended claims.

### Industrial Applicability

The present invention provides a method and system for implementing the VPN, wherein, the VPN is implemented based on a locator/ID separation network and corresponding VPN attribute is added in the ID identifier-to-locator identifier mapping relationship, and during the mapping processing is performed, the locator identifier of the destination host is inquired when the VPN attribute of the source host and the VPN attribute of the destination host are determined to be the same, so as to implement the forwarding of the data message according to the locator identifier of the destination host; and when the VPN attributes are different, unreachable information is returned, so as to implement the VPN efficiently, thus ensuring the convenience and security of the VPN host communications and meeting the requirements of the users on the VPN.

## Claims

1. A method for implementing a Virtual Private Network (VPN), wherein, the method is implemented based on a Locator/ID Separation Protocol (LISP) Network, the VPN network includes an Ingress Tunnel Router (ITR), a map-server and an Egress Tunnel Router (ETR), the method comprises:
after receiving a data message transmitted by a source host, the ITR transmitting a mapping request message carrying a VPN attribute of the source host and an ID identifier of a destination host to a host VPN attribute storage network element;
the host VPN attribute storage network element receiving the mapping request message, and determining the VPN attribute of the destination host according to the ID identifier of the destination host;
the host VPN attribute storage network element comparing the VPN attribute of the source host and the VPN attribute of the destination host to determine whether the VPN attributes of the source host and the destination host are the same, and inquiring the mapping and returning a mapping response message carrying a locator identifier of the destination host only if the VPN attributes are the same, and returning unreachable information if the VPN attributes of the source host and the destination host are different; and
the ITR receiving the mapping response message, forwarding the LISP data message to the ETR according to the locator identifier of the destination host, and the ETR forwarding the LISP data message to the destination host;
wherein, the host VPN attribute storage network element is the map-server or the ETR.

2. The method according to claim 1, wherein,
after the ITR receives the data message transmitted by the source host, the method further comprises: the ITR firstly inquiring a local mapping relationship, and if the ID identifier of the destination host is found and the VPN attribute of the source host and the VPN attribute of the destination host are the same, obtaining the locator identifier of the destination host and forwarding the data message to the ETR according to the locator identifier of the destination host; and only if no ID identifier of the destination host is found in the local mapping relationship, transmitting the mapping request message to the host VPN attribute storage network element.

3. The method according to claim 1, wherein,
in the step of the ETR forwarding the LISP data message to the destination host, the ETR forwarding the LISP data message to the destination host only if the VPN attributes of the source host and the destination host are the same.

4. The method according to claim 1, wherein,
the mapping request message and the mapping response message are transmitted through a LISP control message path; and
the data message is transmitted through a LISP data message path, and the data message contains the VPN attribute.

5. The method according to any of claims 1-4, wherein,
the VPN attribute includes the VPN identifier and/or information of whether the source host is a VPN host, and different VPN identifiers represent different VPNs.

6. A system for implementing a Virtual Private Network (VPN), comprising an Ingress Tunnel Router (ITR), a map-server and an Egress Tunnel Router (ETR), wherein,
the ITR includes a first data message transmitting-receiving module, a message processing module, a first control message transmitting-receiving module, a first local mapping table and a mapping inquiring module, wherein,
the first data message transmitting-receiving module is configured to receive a data message transmitted by a source host, and forward a Locator/ID Separation Protocol (LISP) data message to the ETR;
the message processing module is connected to the first data message transmitting-receiving module, and is configured to analyze the received data message transmitted by the source host and notify the mapping inquiring module, and generate a mapping request message carrying a VPN attribute of the source host and an ID identifier of the destination host according to an inquiry result of the mapping inquiring module; and is further configured to generate a LISP data message to be forwarded to the ETR according to a mapping response message received by the first control message transmitting-receiving module;
the first control message transmitting-receiving module is connected to the message processing module, and is configured to transmit the mapping request message to the host VPN attribute storage network element, and receive the mapping response message transmitted by the host VPN attribute storage network element; the host VPN attribute storage network element is the map-server or the ETR;
the first local mapping table is configured to store a mapping relationship between the VPN attribute, the ID identifier and a locator identifier;
the mapping inquiring module is connected to the message processing module and the first local mapping table, and is configured to inquire the VPN attribute of the source host according to the ID identifier of the source host;
the map-server includes a second control message transmitting-receiving module, a second local mapping table and a first mapping processing module, wherein,
the second control message transmitting-receiving module is configured to receive the mapping request message transmitted by the ITR and transmit the mapping response message to the ITR;
the second local mapping table is configured to store the mapping relationship between the VPN attribute, the ID identifier and the locator identifier;
the first mapping processing module is connected to the second control message transmitting-receiving module and the second local mapping table, and is configured to inquire the second local mapping table according to the ID identifier of the destination host to obtain the VPN attribute of the destination host, and compare the VPN attribute of the source host and the VPN attribute of the destination host to determine whether the VPN attribute of the source host and the VPN attribute of the destination host are the same, and inquire the second local mapping table to obtain the locator identifier of the destination host when the comparison result is the same; and is further configured to generate a mapping response message according to the inquiry result;
the ETR includes a second data message transmitting-receiving module, a third control message transmitting-receiving module, a third local mapping table and a second mapping processing module; wherein,
the second data message transmitting-receiving module is configured to receive the LISP data message transmitted by the ITR;
the third control message transmitting-receiving module is configured to receive the mapping request message transmitted by the ITR and transmit a mapping response message to the ITR;
the third local mapping table is configured to store the mapping relationship between the VPN attribute, the ID identifier and the locator identifier;
the second mapping processing module is connected to the third control message transmitting-receiving module and the third local mapping table, and is configured to inquire the third local mapping table according to the ID identifier of the destination host to obtain the VPN attribute of the destination host, and compare whether the VPN attribute of the source host and the VPN attribute of the destination host are the same, and inquire the third local mapping table to obtain the locator identifier of the destination host when the comparison result is the same; and is further configured to generate a mapping response message according to the inquiry result.

7. The system according to claim 6, wherein,
the mapping inquiring module of the ITR is configured to inquire the first local mapping table according to the ID identifier of the destination host, and compare the VPN attribute of the source host and the VPN attribute of the destination host to determine whether the VPN attribute of the source host and the VPN attribute of the destination host are the same, and inquire the first local mapping table to obtain the locator identifier of the destination host when the comparison result is the same; and is further configured to notify the message processing module to generate the LISP data message to be forwarded to the ETR; and is further configured to notify the message processing module to generate the mapping request message if the mapping relationship of the destination host is not found.

8. The system according to claim 6, wherein,
the first control message transmitting-receiving module of the ITR is further configured to transmit a mapping maintenance request carrying a maintenance operation type and a mapping relationship to be maintained to the map-server;
the third control message transmitting-receiving module of the ETR is further configured to transmit a mapping maintenance request carrying a maintenance operation type and a mapping relationship to be maintained to the map-server;
the second control message transmitting-receiving module of the map-server is further configured to receive the mapping maintenance request transmitted by the ITR or the ETR;
the first mapping processing module of the map-server is further configured to maintain the second local mapping table according to the mapping maintenance request, and the maintenance operation type includes registration, cancellation and modification.

9. The system according to any of claims 6-8, wherein,
the VPN attribute includes the VPN identifier and/or information of whether the source host is a VPN host, and different VPN identifiers represent different VPNs.

10. A method for implementing a Virtual Private Network (VPN), wherein, the method is implemented based on a system for implementing the VPN under Locator/ID Separation Protocol (LISP) network architecture, and the system for implementing the VPN stores a mapping relationship between a VPN attribute, an ID identifier and a locator identifier, and the method comprises:
a message receiving step, in which the system for implementing the VPN receives a message transmitted by a source host;
a mapping processing step, in which the system for implementing the VPN compares the VPN attribute of the source host and the VPN attribute of the destination host to determine whether the VPN attribute of the source host and the VPN attribute of a destination host are the same, inquires the mapping relationship and obtains the locator identifier of the destination host when the VPN attributes are the same, and generates unreachable information when the VPN attributes are different;
a message processing step, in which the system for implementing the VPN forwards the message according to the locator identifier of the destination host or ends the procedure according to the unreachable information.

11. The method according to claim 10, wherein,
in the message processing step, the system for implementing the VPN forwards the message when determining the VPN attributes of the source host and the destination host are the same; otherwise, ends the procedure.

12. The method according to claim 10, wherein,
the mapping processing step is implemented by an Ingress Tunnel Router (ITR), a map-server or an Egress Tunnel Router (ETR) in the LISP network architecture.

13. The method according to any of claims 10-12, wherein,
the VPN attribute includes the VPN identifier and/or information of whether the source host is a VPN host, and different VPN identifiers represent different VPNs.

14. A system for implementing a Virtual Private Network (VPN), wherein, the system is implemented based on a network of Locator/ID Separation Protocol (LISP) architecture, and the system comprises:
a message receiving apparatus, which is configured to receive a message transmitted by a source host and notify a mapping processing apparatus to perform the mapping processing;
the mapping processing apparatus, which is connected to the message receiving apparatus, and is configured to store a mapping relationship between a VPN attribute, an ID identifier and a locator identifier, and perform a mapping processing, which comprises comparing the VPN attribute of the source host and the VPN attribute of the destination host to determine whether the VPN attributes of the source host and the destination host are the same, and inquiring the stored mapping relationship and obtaining the locator identifier of the destination host when the VPN attributes are the same, and generating unreachable information when the VPN attributes are different; and is further configured to transmit a mapping processing result to a message processing apparatus; and
the message processing apparatus, which is connected to the mapping processing apparatus, and is configured to receive the mapping processing result, and perform a message processing according to the mapping processing, which comprises forwarding the message according to the locator identifier of the destination host and ending the communication procedure according to the unreachable information.

15. The system according to claim 14, wherein,
the message processing apparatus is further configured to compare the VPN attribute of the source host and the VPN attribute of the destination host to determine whether the VPN attributes of the source host and the destination host are the same, and forward the message when the VPN attributes are the same; otherwise, end the procedure.

16. The system according to claim 14, wherein,
the mapping processing apparatus is implemented by an Ingress Tunnel Router (ITR), a map-server or an Egress Tunnel Router (ETR), and the message receiving apparatus and the message processing apparatus are implemented by the ITR.

17. The system according to any of claims 14-16, wherein,
the VPN attribute includes the VPN identifier and/or information of whether the source host is a VPN host, and different VPN identifiers represent different VPNs.
